# EUROPÄISCHE PATENTANMELDUNG

(11) **EP 0 583 735 A1**
(43) Veröffentlichungstag der Anmeldung: **23.02.1994**
(21) Anmeldenummer: 93112908.4
(22) Anmeldetag: 12.08.1993
(51) Int. Cl.: A01D 34/67, A01G 3/06

(54) **Werkzeugkopf zur Bearbeitung von Pflanzen oder dgl., insbesondere Fadenschneider**

(30) Priorität: 20.08.1992 DE 4227488
(71) Anmelder: GARDENA Kress + Kastner GmbH, D-89079 Ulm (DE)
(72) Erfinder:
(74) Vertreter: Patentanwälte Ruff, Beier, Schöndorf und Mütschele

(57) **Zusammenfassung**

Ein Aufnahmekanal (30a) für ein strangförmiges Werkzeug (22a) weist Mittel (40a) sowohl zum Schutz des Werkzeuges (22a) gegen Überlastungs-Beschädigungen als auch dafür auf, daß die Fliehkraft des im Aufnahmekanal (30a) liegenden Werkzeugabschnittes ausreicht, um bei Auslösung eine Werkzeugnachstellung zu gewährleisten. Die beiden Enden des Aufnahmekanales (30a) sind in unterschiedlichen Ebenen trichterförmig erweitert, so daß der Werkzeugstrang einerseits berührungsfrei von einer Speicherspule ablaufen und andererseits im Arbeitsbereich quer zur Arbeitsebene genau ausgerichtet werden kann.

## Beschreibung

Die Erfindung betrifft einen Werkzeugkopf, der alleine oder im Zusammenwirken mit weiteren Werkzeugeinheiten durch Schlagen, Schneiden, Scheren oder dgl. Bearbeitungen bzw. Trennschnitte ausführen kann und daher insbesondere zum Trennen stark unterschiedlich dicken bzw. in der Dicke dauernd sich ändernden Schnittgutes, wie Pflanzenstielen, geeignet ist. Bevorzugt ist die Arbeitsbewegung des Werkzeugkopfes rotierend, sie könnte aber auch, ggf. überlagert, schwenkend und/oder im wesentlichen linear vorgesehen sein.

Bei Werkzeugköpfen von als Ganzes mobil arbeitenden Geräten, die ggf. ohne Eigenantrieb (oder Lenkvorrichtung) manuell über die Arbeitsfläche bewegt bzw. geleitet werden oder die durch Abschlagen trennen, sind als Werkzeuge meist stabförmig frei vorstehende Glieder vorgesehen, die statt eigensteif auch rückfedernd elastisch und/oder biegeschlaff flexibel sein können und durch die Arbeitsbewegung in ihrer Arbeitslage gehalten werden. Z.B. können die strangförmigen Werkzeugglieder zwischen jeweils zwei Enden durchgehend kontinuierliche Querschnitte, wie annähernd kreisrunde Querschnitte mit einer Querschnittsweite zwischen etwa 2 und 3 mm haben. Ein innerer bzw. hinterer Längsabschnitt des Werkzeuggliedes dient dann zur Lagesicherung an einer Aufnahme eines Werkzeug-Trägers und der von dieser Aufnahme über die zugehörige Außenseite des Trägers vorstehende Endabschnitt dient als in Trenneingriff gelangender Werkzeugteil, der sich in einer definierten Arbeitsebene mit einer vorbestimmten gerätespezifischen Nenn- bzw. Arbeitsgeschwindigkeit bewegt, die über eine maximale Arbeitsgeschwindigkeit hinaus nicht erhöht werden kann.

Trifft dieser Werkzeugteil dabei auf ein Hindernis, das er nicht zu durchtrennen vermag, so läuft der Träger ohne wesentliche Reduzierung seiner Arbeitsgeschwindigkeit weiter, und der Werkzeugteil muß daher gegenüber dem Träger entgegen der Richtung der Arbeitsbewegung ausweichen. Er wird dabei von einer in Richtung der Arbeitsbewegung hinteren Stützfläche der Aufnahme aufgefangen, durch Anlage an dieser Stützfläche gekrümmt und legt sich ggf. mit dem anschließenden äußeren Endabschnitt gegen die zugehörige Außenfläche des Trägers an. Da diese Ausweichbewegung unter schlagartiger Beschleunigung auf die Arbeitsgeschwindigkeit sowie unter Zugbeanspruchung des Werkzeuggliedes erfolgt, kann selbst durch eine verhältnismäßig eng gekrümmte sowie von einem Anlage-Scheitelpunkt für das Werkzeugglied ausgehende Stützfläche eine Überlastung des Werkzeuggliedes im Bereich des Austrittes aus der Aufnahme nicht verhindert werden.

Solche Überlastungen können z.B. bleibende bzw. plastische Dehnungen an der Krümmungsaußenseite, entsprechende Überstauchungen an der Krümmungsinnenseite, Knickquetschungen, bleibende Querschnittsquetschungen, Querrisse oder dgl., aber auch Schnittverletzungen sein, falls im Bereich der Stützfläche scharfe Kanten liegen. Beträgt z.B. der Krümmungsradius der Stützfläche ein Viertel bis ein Fünftel der Querschnittsweite bzw. des Durchmessers des Werkzeuggliedes und liegt dieses Werkzeugglied in der Arbeitslage nur punkt- oder querlinienförmig an einer Stelle in der Aufnahme an, so ist bei den heute üblichen hohen Arbeitsgeschwindigkeiten mit Beschädigungen der genannten Art zu rechnen, zumal die genannten Belastungen häufig wiederkehrend an derselben Stelle des Werkzeuggliedes auftreten, also Wechselbelastungen sind.

Der Erfindung liegt des weiteren die Aufgabe zugrunde, einen Werkzeugkopf zu schaffen, bei welchem Nachteile bekannter Ausbildungen und/oder der beschriebenen Art vermieden sind und dessen Werkzeugglied oder Werkzeugglieder insbesondere bei einfacher Ausbildung vor Schäden durch Wechselbelastung an derjenigen Stelle geschützt werden können, die im Bereich des Ein-, Durch- und/oder Austrittes der Werkzeug-Aufnahme liegt.

Erfindungsgemäß sind Mittel vorgesehen, durch welche zusätzlich zu einer ggf. konvex gekrümmten Stützfläche ein Beschädigungsschutz für das jeweilige Werkzeugglied unter denjenigen Belastungsbedingungen erzielt wird, die aufgrund der gerätespezifischen Charakteristika maximal auftreten können. Ein wesentliches Charakteristikum ist hier die maximale Arbeitsgeschwindigkeit, der die Auslenkgeschwindigkeit des Werkzeuggliedes beim Auftreffen auf einen unnachgiebigen Widerstand entspricht. Einfluß auf die Belastungen können aber auch z.B. Reibwerte haben, die zwischen dem Werkzeugglied und dem Hindernis auftreten.

Der Beschädigungsschutz ist so bemessen, daß das Werkzeugglied auch nach einer Vielzahl von Ausweichbewegungen keine bleibenden Querschnittsverformungen aufweist. Ist das Werkzeug als bestimmungsgemäß sich verhältnismäßig schnell selbst abnutzendes Verschleißwerkzeug ausgebildet, dessen in Trenneingriff gelangender Werkzeugteil in annähernd regelmäßigen Zeitabständen zu erneuern ist, so braucht der Beschädigungsschutz nicht oder nicht wesentlich länger wirksam zu sein als die Standzeit dieses Werkzeugteiles im praktischen Betrieb, weil ein Abreißen des Werkzeuggliedes gegen Ende einer Verschleißperiode keine besonderen Nachteile mit sich bringen würde.

Anstatt den Beschädigungsschutz wenigstens teilweise durch eine elastisch mit ansteigender Federkennlinie nachgiebige Stützfläche zu bilden oder zusätzlich hierzu ist es vorteilhaft, den Beschädigungsschutz dadurch zu erreichen, daß derjenige Teil der Stützfläche, von welchem das Werkzeugglied in Arbeitslage im Abstand liegt und gegen welchen es beim Ausweichen angelegt wird, gegenüber der Querschnittsweite des Werkzeuggliedes mindestens 7- bis 20-fach, insbesondere etwa 15-fach, länger ist, wobei je nach Materialeigenschaften des Werkzeuggliedes ausgehend vom 8-fachen jedes folgende ganzzahlige Mehrfache vorgesehen sein kann.

Nach innen an die Stützfläche anschließend ist zweckmäßig eine in Längsrichtung des Werkzeuggliedes sich linien- oder bandförmig anschließende Anlagefläche für das Werkzeugglied vorgesehen, die kontinuierlich bzw. absatzfrei in die Stützfläche übergeht und an der das Werkzeugglied auch in Arbeitslage anliegen kann. Die Stützfläche ist statt hochzahlig polygonal zweckmäßig kontinuierlich bogenförmig gekrümmt und erstreckt sich um ihre zentrale Achse über einen Bogenwinkel von mindestens 90° oder mehr. Der mittlere Abstand der Stützfläche von dieser Zentralachse liegt vorteilhaft in der Größenordnung des 5- bis 20-fachen der Querschnittsweite des Werkzeuggliedes, insbesondere etwa des 10-fachen, wobei der Abstand vorzugsweise mindestens etwa 10 bis 25 mm, bevorzugt etwa 20 mm, beträgt.

Der Beschädigungsschutz kann auch dadurch erreicht werden, daß das Werkzeugglied zumindest in Nähe der oder an der Außenseite des Trägers gegenüber diesem quer zur Arbeitsebene ein kleineres Bewegungsspiel hat als etwa parallel zur Arbeitsebene bzw. zur Arbeitsbewegung. Dadurch kann der trennende Werkzeugteil so in der Arbeitsebene festgelegt werden, daß er bei aufeinanderfolgendem Auftreffen auf Schnittgut nicht gegeneinander versetzte Kerben schlägt, sondern im wesentlichen immer wieder in dieselbe Kerbe gelangt und dadurch in kürzester Zeit die Trennung erreicht. Das Spiel quer zur Arbeitsebene könnte zwar in der Größenordnung des Mehrfachen der Querschnittsweite des Werkzeuggliedes, z.B. des 2- bis 3-fachen liegen, liegt jedoch bevorzugt höchstens in der Größenordnung dieser Querschnittsweite oder darunter, z.B. in der Größenordnung eines halben oder eines Millimeters.

Demgegenüber kann das größte Bewegungsspiel, gemessen in der Fläche der zugehörigen Außenseite des Trägers, das 6- bis 20-fache der Querschnittsweite, insbesondere etwa das 15-fache, betragen; dies ergibt sich z.B. durch den Abstand derjenigen Stelle vom zugehörigen Abschnitt des in Arbeitslage befindlichen Werkzeuggliedes, an welcher die Stützfläche insbesondere tangential kontinuierlich in die Außenfläche des Trägers übergeht. Bei einer einfachen Ausführungsform ist die Öffnung im Träger, an welcher das Werkzeugglied ins Freie austritt, im Querschnitt etwa parallel zur Arbeitsebene länglich, wobei ihre Längserstreckung dem 5- bis 15-fachen, insbesondere etwa dem 10-fachen, ihrer Quererstreckung entsprechen kann.

Statt der beschriebenen Ausbildung oder zusätzlich dazu ist ein wesentlich verbesserter Beschädigungsschutz des Werkzeuggliedes auch dadurch zu erreichen, daß es in Arbeitslage an seiner in Richtung der Arbeitsbewegung vorderen Seite und/oder an einer bzw. beiden etwa parallel zur Arbeitsebene liegenden Seiten verhältnismäßig eng bzw. mit geringem Bewegungsspiel gegenüber dem Träger geführt ist, wenn es sich in Arbeitslage befindet. Diese Führung hat von der zugehörigen Außenseite des Trägers keinen oder nur einen geringen Abstand, der höchstens zwischen dem 4- und 1-fachen der Querschnittsweite des Werkzeuggliedes liegt. Außerdem erfolgt die Führungsanlage linienförmig parallel zum Werkzeugglied. Das Bewegungspiel liegt zweckmäßig höchstens in der Größenordnung zwischen dem 2-fachen und weniger als dem 1-fachen, z.B. etwa der Hälfte, der Querschnittsweite des Werkzeuggliedes, das in der von Trenndruck unbelasteten Arbeitslage auch an mindestens einer der Führungsflächen anliegen kann.

Anstatt für z.B. stabförmig mit einem inneren Ende am Träger befestigte eigensteife Werkzeugglieder ist die erfindungsgemäße Ausbildung insbesondere für solche Werkzeugköpfe geeignet, bei welchen der trennende Werkzeugteil durch einen Strangabschnitt gebildet ist, der von einem Strang-Vorrat bzw. -Speicher ausgeht und daher durch Nachfüttern von Strangmaterial aus diesem Speicher jederzeit verlängert bzw. erneuert werden kann. Der Speicher befindet sich zweckmäßig zentral in einem Gehäuseraum des Werkzeugkopfes und kann ein spulenartiger Wickelspeicher sein, von dem der Strang tangential zum inneren Ende der Werkzeug-Aufnahme abläuft und durch diese dann an die Außenseite des Trägers geführt ist.

Dieses innere, an einem Innenumfang des Werkzeug-Trägers mündende Ende der Aufnahme hat vorteilhaft etwa parallel zur Arbeitsebene eine Weite, die höchstens etwa dem 7- bis 2-fachen, insbesondere etwa dem 5-fachen, der Querschnittsweite des Werkzeuggliedes entspricht. Die Weite quer zur Arbeitsebene ist demgegenüber größer, nämlich annähernd doppelt so groß. Beide, an der inneren Mündungsöffnung der Aufnahme liegenden Weiten nehmen zur äußeren Mündungsöffnung trichterförmig unter unterschiedlichen Verengungswinkeln ab, nämlich die Weite quer zur Arbeitsebene unter einem größeren spitzen Winkel, so daß beide Weiten kontinuierlich in einen mittleren, engsten Abschnitt der Aufnahme übergehen, in welchem das Werkzeugglied nach allen Richtungen etwa gleiches Bewegungsspiel hat.

Die in Richtung der Arbeitsbewegung vorne liegende Führungsfläche kann am inneren Ende der Aufnahme ebenfalls konvex annähernd kontinuierlich gekrümmt sein, und zwar mit einem anderen, insbesondere einem größeren Krümmungsradius als die Stützfläche. Entsprechend konkav, jedoch mit einem größeren Krümmungsradius kann auch diejenige Führungsfläche gekrümmt sein, welche am inneren Ende der Aufnahme hinter dem Werkzeugglied liegt und ggf. mit der Stützfläche einen annähernd S-förmigen Bogen bildet. Die vordere, gekrümmte Führungsfläche kann kontinuierlich bzw. tangential nach außen in die annähernd geradlinige Führungsfläche übergehen, die bis zur zugehörigen Außenseite des Trägers reicht.

Durch die beschriebene Ausbildung ist das Werkzeugglied nur in einem mittleren Längsabschnitt der Aufnahme nach allen Querrichtungen mit geringstem Bewegungsspiel zentriert, während der nach außen anschließende Abschnitt zunehmendes Bewegungsspiel etwa parallel zur Arbeitsebene und der nach innen anschließende Abschnitt zunehmendes Bewegungsspiel quer zur Arbeitsebene hat. Der Werkzeugstrang kann aus einem nichtmetallischen Werkstoff, wie einem Kunststoff, bzw. aus einem solchen Werkstoff bestehen, der weicher als Stahl ist und/oder ohne bleibende Verformung eine Strangkrümmung zuläßt, deren Krümmungsradius unter dem 10- bis 60-fachen der Querschnittsweite des Stranges liegt.

Unabhängig von den beschriebenen Ausbildungen ergeben sich hinsichtlich der Schonung des Werkzeuggliedes, insbesondere aber hinsichtlich der einfachen Nachstellbarkeit, wesentliche Vorteile, wenn Mittel vorgesehen sind, um eine Nachstellkraft für den trennenden Werkzeugteil auch dann zur Verfügung zu haben, falls das Werkzeugglied von innen nach außen höchstens etwa bis an die zugehörige Außenseite des Werkzeug-Trägers reicht. Anstatt Antriebs- bzw. Fördermittel zur unmittelbaren Nachstellförderung des Werkzeuggliedes vorzusehen, ist zweckmäßig die Masse, Lage und Gleitführung des innerhalb des oder der Werkzeug-Träger liegenden Abschnitte des joder der Werkzeugglieder sowie die Leichtgängigkeit des Abzugs vom Speicher so gewählt, daß die durch die Arbeitsbewegung auf diesen bzw. alle vorhandenen Abschnitte wirkenden Massenkräfte zur Nachstellung ausreichen. Selbst wenn das Werkzeugglied unmittelbar an der zugehörigen Außenfläche des Trägers oder sogar mit einem gewissen Abstand nach innen abgerissen ist, reichen dadurch die Nachstellkräfte für ein selbsttätiges Nachstellen während der weiterlaufenden Arbeitsbewegung aus.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: einen Werkzeugkopf an einem erfindungsgemäßen Trenngerät,
- Fig. 2: den Arbeitskopf des Trenngerätes gemäß Fig. 1 in vergrößerter Darstellung,
- Fig. 3: den Werkzeugkopf des Arbeitskopfes gemäß Fig. 2 in einem vergrößerten Ausschnitt,
- Fig. 4: den Werkzeugkopf gemäß Fig. 3 in Draufsicht,
- Fig. 5: einen Ausschnitt der Fig. 4 in vergrößerter geschnittener Darstellung,
- Fig. 6: einen weiteren Werkzeugkopf im Axialschnitt,
- Fig. 7: den Grundkörper des Werkzeugkopfes gemäß Fig. 6 in um 90° verdrehter Darstellung und
- Fig. 8: den Grundkörper gemäß Fig. 7 in Ansicht auf die Innenseite.

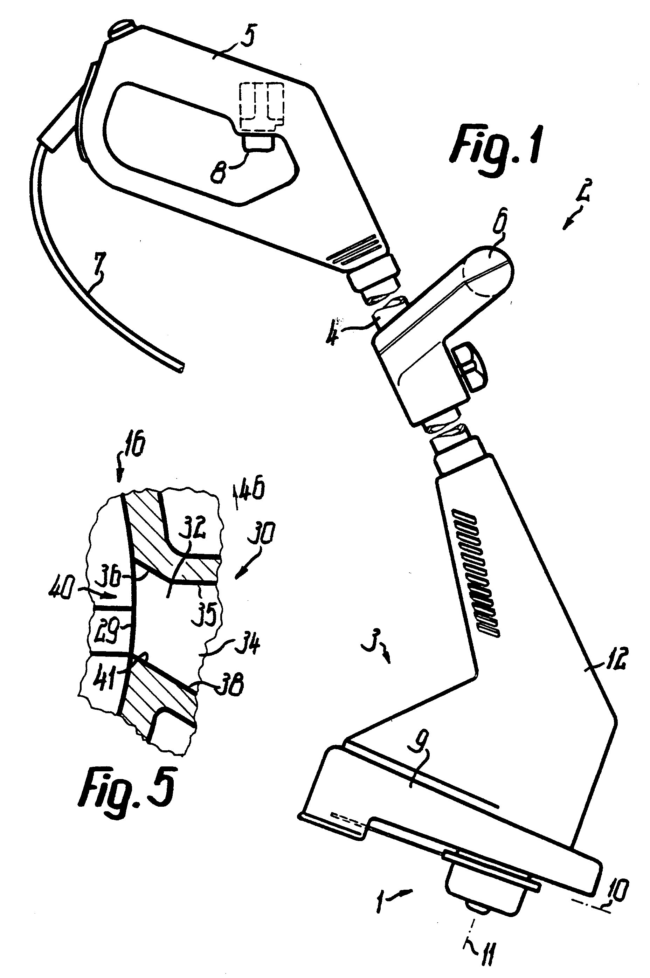

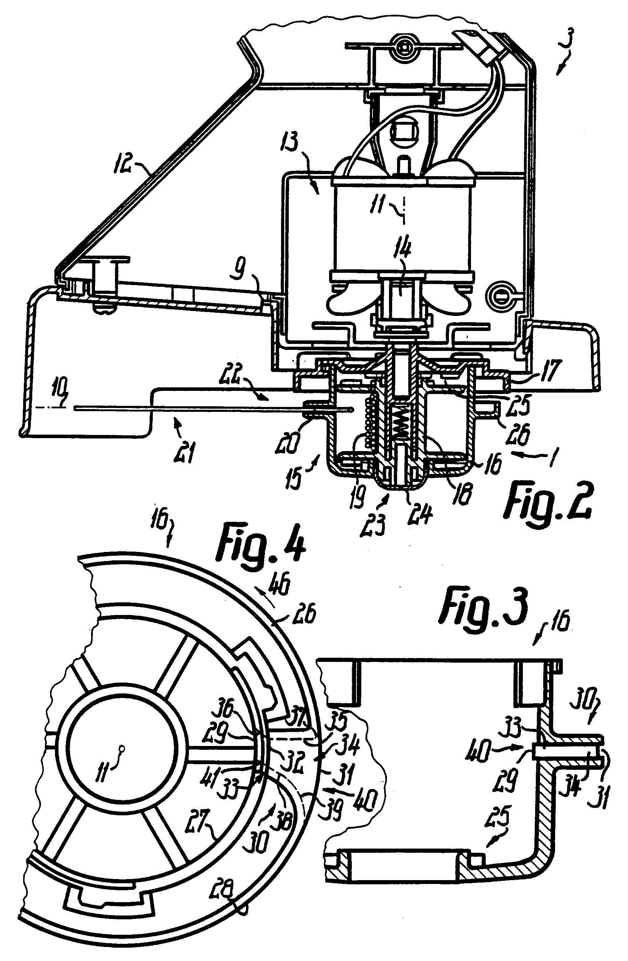

Der Werkzeugkopf 1 ist z.B. an einem erfindungsgemäßen Trenngerät 2 gemäß den Figuren 1 und 2 anzuordnen, das als sog. Fadenschneider ähnlich wie eine Sense mit zwei Händen frei und auch ohne weitere Abstützung getragen sowie hin und her schwingend bewegt werden kann, um längerstielige Pflanzen zu trennen. Der unterste Bereich ist durch einen Gerätekopf 3 gebildet, von dessen Oberseite ein annähernd geradliniger, einstieliger Stockholm 4 nach oben absteht. Dieser weist am oberen Ende einen Führungsgriff 5 und darunter mit Abstand oberhalb des Gerätekopfes 3 einen Bügelgriff 6 auf, der quer zum Stockholm 4 an dessen Vorder- bzw. Oberseite liegt. Die beiden Griffe 5, 6 sind zum Halten mit jeweils einer Hand der Bedienungsperson vorgesehen. Vom hinteren Ende des Führungsgriffes 5 ist ein elektrisches Anschlußkabel 7 zur elektrischen Stromversorgung des Trenngerätes 2 weggeführt, in dessen entsprechende Leitung innerhalb des Führungsgriffes 5 ein Betriebsschalter zwischengeschaltet ist. Dessen frei an der Unterseite des Griffstückes des Führungsgriffes 5 liegendes Betätigungsglied 8 gedrückt gehalten werden muß, um den Arbeitsbetrieb des Trenngerätes 2 aufrechtzuerhalten. Bei Freigabe des Betätigungsgliedes 8 schaltet das Trenngerät 2 selbsttätig sofort ab.

Der Gerätekopf 3 weist eine nach unten offen schalenförmige Konsole 9 auf, die den Haupttragkörper für die im Gerätekopf 3 vorgesehenen Bauteile bildet. An der Oberseite der Konsole 9 ist ein äußeres Gehäuse 12 so befestigt, daß seine Unterseite durch die Konsole 9 im wesentlichen verschlossen ist und die Konsole 9 nach allen Seiten seitlich unterschiedlich über die Außenseite des Gehäuses 12 vorsteht. Das Gehäuse 12 ist nach oben bis zum unteren Ende des Stockholmes 4 verlängert und mit diesem zerstörungsfrei lösbar verbunden. An der Oberseite der Bodenwand der Konsole 9 ist ein innerhalb des Gehäuses 12 liegender Antrieb 13 in Form eines Elektromotors befestigt, dessen frei nach unten ragende Motorwelle 14 den Werkzeugkopf 1 unmittelbar so trägt, daß er wenigstens teilweise innerhalb der Konsolenschale liegt.

Durch die Motorachse ist somit die Drehachse 11 des Werkzeugkopfes 1 bestimmt, zu welcher die Arbeitsebene 10 des Werkzeugkopfes 1 rechtwinklig liegt. Gegenüber der Arbeitsebene 10 und der Drehachse 11 ist der Stockholm 4 nach hinten geneigt.

Der Werkzeugkopf 1 bildet einen zentralen, gehäuseförmigen Werkzeug-Träger 15, der im wesentlichen aus einem topfförmigen Grundkörper 16 und einem dessen offene Topfseite verschließenden, annähernd ringscheibenförmigen Deckel 17 gebildet ist. Die Topföffnung liegt hier zum Antrieb 13 hin, wobei der Deckel 17 über eine Deckelnabe drehschlüssig mit der Welle 14 und über eine zerstörungsfrei leicht lösbare Verbindung ebenfalls in Arbeitsrichtung drehschlüssig mit dem Grundkörper 16 verbunden ist, welcher hinsichtlich seiner Antriebsverbindung im wesentlichen nur über den Deckel 17 mit der Welle 14 verbunden ist.

Die Verbindung zwischen Grundkörper 16 und Deckel 17 kann z.B. durch Drehen um die Drehachse 11 gelöst bzw. eingerückt werden und eine bajonettverschlußartige Verbindung mit drei gleichmäßig über den Umfang verteilten Riegelpaaren sein, so daß der Grundkörper 16 axial spielfrei gesichert am Deckel 17 hängt und durch Trennen vom Deckel 17 vollständig vom übrigen Gerät 2 entfernt werden kann.

In das durch den Träger 15 gebildete Gehäuse kann zerstörungsfrei leicht auswechselbar ein Speicher 18 für einen Werkzeug-Strang 19, nämlich z.B. eine Spule, eingesetzt werden, die an beiden Enden einer Spulennabe jeweils einen ringscheibenförmig vorstehenden Spulenflansch aufweist. Der Strang 19 ist auf die Spulennabe in einer Vielzahl von Lagen annähernd bis zum etwa zylindrischen Innenumfang des Mantels des Grundkörpers 16 aufgewickelt, bis zu welchem auch die Spulenflansche annähernd reichen.

Das vom Wickelkörper ablaufende Strangende bildet ein Werkzeugglied 20, welches aus dem Träger 15 ins Freie nach außen geführt ist und so außerhalb des Trägers 15, nämlich mit seinem gesamten freiliegenden Teil, einen biegeschlaffen Werkzeugteil 21 bildet. Der gesamte Strang 19 ist als Werkzeug 22 mit kontinuierlich konstanten Querschnitten geeignet und kann zur Verlängerung des Werkzeugteiles 21 bzw. zum Ersetzen eines abgerissenen Werkzeugteiles 21 mit einer Stelleinrichtung 23 nachgestellt werden.

Die Stelleinrichtung 23 wird mit einem drucktastenartigen Betätigungsglied 24 ausgelöst, welches etwa in der Achse 11 im Bereich der freien Stirnfläche des Grundkörpers 16 liegt. Durch manuelles Hineindrücken oder durch Aufschlagen des Werkzeugkopfes 1 auf den Boden wird das Betätigungsglied 24 in den Träger 15 verschoben, wobei es den Speicher 18 mitnimmt. Der Speicher 18 weist an beiden voneinander abgekehrten Stirnflächen der Spulenflansche Kränze mit Steuernocken auf, wobei dem einen Kranz Gegennocken an der vom Betätigungsglied 24 durchsetzten Bodenwand des Grundkörpers 16 und dem anderen Nockenkranz Gegennocken an der inneren Stirnfläche des Deckels 17 zugeordnet sind.

Durch das axiale Verschieben des Speichers 18 trennen die Nocken und Gegennocken im Bereich der Bodenwand des Grundkörpers 16, während gleichzeitig die zuvor noch freien Nocken des anderen Nockenkranzes in den Bereich der Gegennocken des Deckels 17 gelangen. Die Nocken bzw. die Gegennocken sind so gegeneinander in Umfangsrichtung versetzt, daß beim Ausrücken des erstgenannten Kranzes der Speicher 18 eine Teildrehung bis zum Anschlag an den Gegennocken des Deckels 17 ausführen kann. Wird das Betätigungsglied 24 wieder freigegeben, so wird es durch eine Rückstellfeder einschließlich des Speichers 18 in seine Ausgangslage zurückgeführt, d.h. daß die oberen Nocken und Gegennocken wieder außer Eingriff gelangen, während die unteren Nocken und Gegennocken eine weitere Teildrehung zulassen.

Wirkt während dieses Steuervorganges auf den Speicher 18 eine Drehkraft, z.B. durch Zug am Werkzeugglied 20, so führt der Speicher 18 die genannten Teildrehungen gegenüber dem Träger 15 aus, und ein entsprechendes Stück des Stranges 19 wird zur Bildung des Werkzeugträgers 21 nach außen gebracht. Die Nocken und Gegennocken bilden somit ein Dreh-Schrittschaltwerk 25 für den Wickelkörper, das während der Arbeitsdrehung bzw. während des Antriebes des Werkzeugkopfes 1 ausgelöst werden kann.

Der Grundkörper 16 ist hier über seine gesamte Höhe annähernd kreiszylindrisch, wobei der Deckel 17 ringscheibenförmig über seinen Außenumfang vorsteht. Mit Abstand vom Deckel 17 und etwa in der Mitte seiner Axialerstreckung weist der Grundkörper 16 einen über seinen Außenumfang ringscheibenförmig vorstehenden Kranz 26 auf, dessen Außenweite etwa ein bis zwei Drittel größer als die Axialerstreckung des Trägers 15 bzw. des Grundkörpers 16 ist. Die Außen- bzw. Innenweite des äußeren Mantels des Deckels 17 ist demgegenüber noch geringfügig größer, und der Deckel 17 hat vom Kranz 26 nur einen verhältnismäßig kleinen axialen Spaltabstand. Am Innenumfang des Mantels des Grundkörpers 16 und mit Abstand zwischen dessen Enden ist eine Eintrittsöffnung 29 vorgesehen, während am Außenumfang 28 des Kranzes 26 eine Austrittsöffnung 31 vorgesehen ist, die die Enden einer kanalförmigen Aufnahme 30 für das Werkzeugglied 20 bilden und wie die Aufnahme 30 etwa in der Arbeitsebene 10 liegen.

Die allseits vom Kranz 26 einteilig begrenzte Aufnahme 30 besteht aus einem nichtmetallischen Werkstoff, wie Kunststoff, so daß sie wie der Kranz 26 einteilig mit dem übrigen Grundkörper 16 und den zugehörigen Nocken der Stelleinrichtung 23 ausgebildet sein kann. Die engste Stelle der Aufnahme 30 liegt näher beim Innenumfang 27 als beim Außenumfang 28 und bildet einen Zentrierabschnitt 32 für die Ausrichtung des Werkzeuggliedes 22 in und entgegen Arbeitsrichtung Pfeil 46. Nach innen schließt an diesen Zentrierabschnitt 32 ein Führungsabschnitt 33 etwa gleicher bzw. konstanter Weite an, dessen Mittelebene gegenüber der zugehörigen Axialebene des Grundkörpers 16 entsprechend dem Zulauf des vom Wickelkörper 19 tangential ablaufenden Strangteiles schräg liegt, so daß von der Eintrittsöffnung 29 ausgehend eine Art Eintritts-Trichter 33 gebildet ist.

Nach außen schließt an den Zentrierabschnitt 32 ein zunächst konstant und dann progressiv erweiterter sowie bis zur Austrittsöffnung 31 reichender Trichter 34 an. Die Änderungen der lichten Querschnitte des Aufnahmekanales sind im wesentlichen nur parallel zur Arbeitsebene 10 bzw. zur Richtung 46 vorgesehen, während der Aufnahmekanal quer zur Arbeitsebene 10 über seine gesamte Länge und Breite annähernd konstante lichte Höhe hat. Diese lichte Höhe kann auch im Bereich des Zentrierabschnittes 32 kleiner als dessen lichte Breite sein, nämlich dem Werkzeugglied 20 quer zur Arbeitsebene 10 nur gerade dasjenige Bewegungsspiel geben, das für ein möglichst reibungsarmes Längs- und/oder Quergleiten des zugehörigen Abschnittes des Werkzeuggliedes 20 erforderlich ist. Dieses Bewegungsspiel kann kleiner als 1 mm sein.

Die lichte Breite des Zentrierabschnittes 32 bzw. des inneren Führungsabschnittes 33 kann z.B. zwischen dem 1- und 4-fachen, insbesondere etwa um das 2-fache größer als die Querschnittsweite des Werkzeuggliedes 22 sein. Die lichte Breite des inneren Endes des Trichters 34 ist gleich derjenigen des Zentrierabschnittes 32, nimmt jedoch nach außen stark, nämlich beispielsweise bis zum etwa 10- bis 20-fachen der Querschnittsweite des Werkzeuggliedes 22 zu, wobei zuerst eine spitzwinklige und dann eine stumpfwinklige Erweiterung vorgesehen ist. Der Aufnahmekanal weist somit im Querschnitt wie seine Eintrittsöffnung 29 und seine Austrittsöffnung 31 flach rechteckige Form mit abgerundeten Eckzonen auf und ist über seine gesamte Länge über den Umfang durchgehend geschlossen.

Die in Richtung 46 vordere, durch eine Schmalkante gebildete Begrenzungsfläche des Aufnahmekanales liegt auf einem mittleren Teil ihrer Länge annähernd in einer Axialebene der Drehachse 11 bzw. demgegenüber parallel nur geringfügig um ein Maß nach vorne versetzt, das in der Größenordnung der Querschnittsweite des Werkzeuggliedes 20 oder darunter liegt. Dadurch bildet diese Begrenzungsfläche eine über den größten Teil der Länge des Aufnahmekanales reichende Ausrichtfläche 35, an welcher das Werkzeugglied 20 unter den beim Arbeitsbetrieb auftretenden Fliehkräften längslinienförmig anliegen kann. Diese Ausrichtfläche 35 geht nach innen in eine unter einem stumpfen Winkel zurückversetzt geneigte Führungsfläche 36 über, die die zugehörige Begrenzungsfläche des Führungsabschnittes 33 bildet und an welcher das Werkzeugglied 20 insbesondere dann anliegen kann, wenn der Wickelkörper 19 noch relativ voll ist.

Der stumpfwinklig abgewinkelte Übergang zwischen den Flächen 35, 36 bildet die zugehörige Begrenzung des Zentrierabschnittes 32. Das äußere Ende der Ausrichtfläche 35 geht über eine mit sehr kleinem Krümmungsradius abgerundete Anschlagfläche 37 in die kreiszylindrische Außenseite 28 des Kranzes 26 kontinuierlich bzw. absatzfrei über, so daß die Ausrichtfläche 35 annähernd bis zu dieser Außenseite 28 reicht.

Die gegenüberliegende, in Richtung 46 hintere Begrenzung des Aufnahmekanales 30 bildet im Bereich des Zentrierabschnittes 32 und des Führungsabschnittes 33 eine annähernd geradlinige Führungsfläche 38, welche nach außen gegenüber der Ausrichtfläche 35 spitzwinklig divergiert und eine Ausrichtung ähnlich derjenigen einnehmen kann, wie sie anhand der Führungsfläche 36 beschrieben ist. Die bis zur Eintrittsöffnung 29 reichende Führungsfläche 38 ist jedoch wesentlich länger als die Führungsfläche 36 und geht nach außen in eine annähernd vierteilkreisförmig gekrümmte Schutzfläche 39 über, welche kontinuierlich und absatzfrei an den Außenumfang 28 anschließt.

Der Krümmungsradius dieser Schutzfläche 39 liegt in der Größenordnung des 4-fachen der Querschnittsweite des Werkzeuggliedes 20, während der entsprechende Krümmungsradius der Anschlagfläche 37 gegenüber dieser Querschnittsweite etwa gleich groß oder kleiner ist. Das innere Ende der Führungsfläche 38 kann eine der Führungsfläche 36 gegenüberliegende Stützfläche 41 bilden, an welcher das Werkzeugglied 20 bei Vibrations- bzw. Schlagbewegungen entgegen Richtung 46 im Bereich der Eintrittsöffnung 29 anschlagen kann. Die beiden erläuterten, einander gegenüberliegenden Begrenzungsflächen bilden auch die Trichterflächen der Trichter 33, 34. Die hintere Begrenzungsfläche 38, 39, 41 ist wesentlich längr als die vordere Begrenzungsfläche 35 - 37.

Durch die beschriebene Ausbildung sind Mittel vorgesehen, welche einen Beschädigungsschutz 40 insbesondere für denjenigen Teil des Stranges 19 darstellen, welcher vom Wickelkörper ablaufend das Werkzeug 22 bildet. Im unbelasteten Arbeitsbetrieb wird das Werkzeugglied 20 durch die auftretenden Zentrifugalkräfte im wesentlichen geradlinig gestreckt in der Arbeitsebene 10 gehalten, wobei es mit seiner vorderen Mantellinie an der Ausrichtfläche 35 anliegen kann. Vibrationen des Werkzeuges 22 sowohl aufgrund von elastischen Längenänderungen des Stranges 19 als auch durch Bewegungen quer zur Arbeitsebene 10 bzw. in und entgegen Pfeil 46 werden durch die beschriebene Ausbildung der Aufnahme 30 stark verringert.

Trifft der Werkzeugteil 21 auf ein zu trennendes Hindernis, so wird er gegenüber der Aufnahme 30 mehr oder weniger stark entgegen Richtung Pfeil 46 ausgelenkt, wobei das Werkzeugglied 20 von der Ausrichtfläche 35 abhebt und vom Zentrierabschnitt 32 nach außen nach und nach an der Führungsfläche 38 bzw. der Schutzfläche 39 anliegen kann. Im Falle größter Auslenkung liegt der Werkzeugteil 21 dann an der gesamten Schutzfläche 39 und außerdem an einem Teil der Außenfläche 28 an. Sobald der Werkzeugteil 21 von dem Hindernis wieder frei ist, wird er durch die zentrifugalen Massenkräfte zu seiner Arbeitslage zurückgestellt, er hebt also von den Flächen 38, 39 ab und schlägt an der Ausrichtfläche 35 an, wobei er im Bereich des Zentrierabschnittes 32 einen Gelenkabschnitt bildet.

Ist die Rückstellkraft verhältnismäßig groß, so wird das Werkzeugglied 20 zunächst über die Arbeitslage hinaus zurückgestellt, so daß es sich um die Anschlagfläche 37 krümmt bzw. durch diese schonend aufgefangen wird. Aus dieser Auffanglage gelangt das Werkzeugglied 20 dann durch die Zentrifugalkräfte in seine ideale Arbeitslage. Je nach Schnittgut können diese Vorgänge bei jeder Umdrehung recht häufig und daher pro Minute mehrere tausend Mal auftreten, woraus sich die hohen Wechselbelastungen der im Bereich der Aufnahme 30 liegenden Querschnitte des Werkzeuges 22 ergeben.

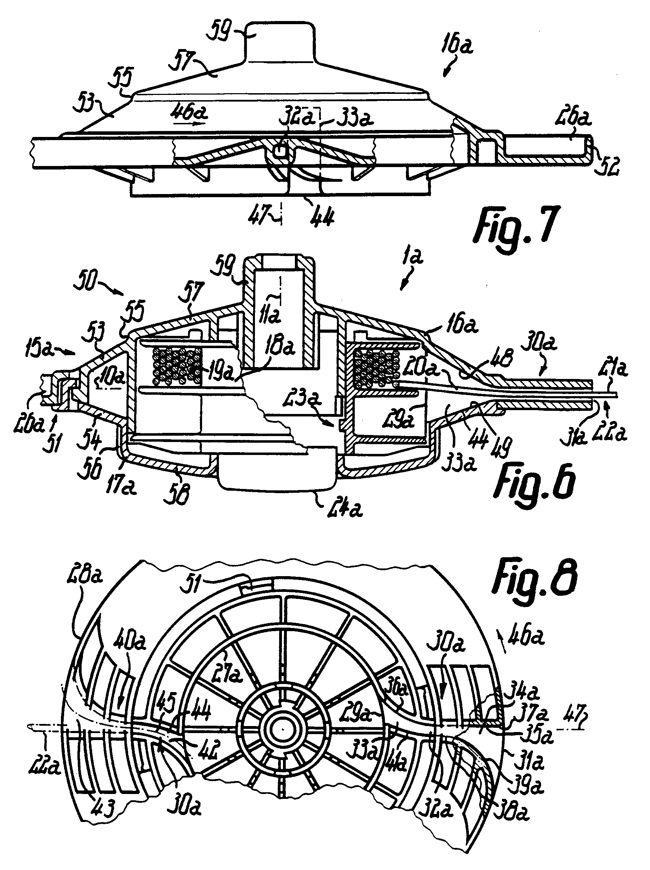

In den Figuren 6 bis 8 sind für einander entsprechende Teile die gleichen Bezugszeichen wie in den Figuren 1 bis 5, jedoch mit dem Index "a" verwendet, weshalb alle Beschreibungsteile sinngemäß für alle Ausführungsformen gelten. Während beim Werkzeugkopf 1 die offene Unterseite des Schalenkörpers der Konsole 9 und das untere Ende des Werkzeugkopfes 1 so freiliegen, daß der Werkzeugteil 21 seitlich sowie vorne über den Umfang des Schalenkörpers hervortritt und im hinteren Bereich in den Schalenkörper eintritt, ist der Werkzeugkopf 1a insbesondere für ein solches Trenngerät vorgesehen, bei welchem seine Unterseite durch einen weiteren Schalenkörper oder dgl. geschützt ist. Dieser weitere Schalenkörper kann als Klappe bzw. Boden-Laufkufe an der Rückseite der Konsole 9 zwischen einer Schließstellung und einer Öffnungsstellung schwenkbar gelagert sein und nimmt mit seiner zur Konsole 9 gerichteten Schalenöffnung das freie Ende des Werkzeugkopfes 1a so auf, daß zwischen der Konsole 9 und diesem Schalenkörper ein Aus- und Eintrittsschlitz für das Werkzeug 22 gebildet ist. Die Kufe kann eine Abrollfläche zur Änderung der Neigungslagen der Arbeitsebene 10 bilden.

Ferner ist hier der Grundkörper 16a näher beim Antrieb vorgesehen, auf dessen Welle drehschlüssig anzuordnen und flachschalenförmig nach unten offen, während der vom Antrieb weiter entfernte Deckel 17a durch die genannte Verbindung als Ganzes vollständig abzunehmen, in einer zentralen Öffnung vom Betätigungsglied 24a durchsetzt und ebenfalls flachschalenförmig ausgebildet ist. Der nach Abnehmen des Deckels 17a herausnehmbare Speicher 18a weist hier zwei axial benachbarte, gesonderte Wickelkörper des Stranges 19a auf, so daß zwei annähernd gleichmäßig über den Umfang verteilte Werkzeuge 22a gebildet sind, denen jeweils eine gesonderte Aufnahme 30a zugeordnet ist. Diese Aufnahmen 30a können unterschiedlich oder gleich ausgebildet sein.

Die Länge des Aufnahmekanales 30a entspricht hier etwa dem 20-fachen der Querschnittsweite des Werkzeuges 22, wobei der Aufnahmekanal dem Werkzeug 22 in der Arbeitslage nur eine einzige sehr flache Krümmung aufzwingt und glatte, reibungsarme Gleitflächen für das Werkzeug 22 bildet. Dadurch reicht das Fliehgewicht aller in den Aufnahmekanälen liegenden Abschnitte der Werkzeuge 22a unter den bestimmungsgemäßen Arbeitsdrehzahlen von mehreren tausend U.p.m. dafür aus, die Stränge 19a durch Drehen des Speichers 18a abzuwickeln und dadurch das Werkzeug 22a selbst dann zuzustellen, wenn eines oder beide zunächst nur bis zur Außenfläche 28a reichen, also nicht über diese Außenflächen vorstehen.

Um trotz der relativ großen Länge das Ende des Stranges 19a beim Speicherwechsel einfach in den Aufnahmekanal von der Eintrittsöffnung 29a her einfädeln zu können, ist ein innerer Längsabschnitt 42 des Aufnahmekanales über seine Länge an einer Begrenzungsseite zu öffnen bzw. zu schließen, so daß hier der Strang quer zu seiner Längsrichtung eingesetzt werden kann. Dieser Abschnitt 42 ist nutförmig, wobei die Öffnung 44 der Nut an einer zur Arbeitsebene 10a etwa parallelen Seite, insbesondere der dem Deckel 17a zugekehrten Seite liegt, so daß die Nutöffnung 44 mit dem Deckel 17a im Betriebszustand wieder geschlossen werden kann. Der Abschnitt 42 nimmt etwa die Hälfte der Länge des Aufnahmekanales 30a ein, und der restliche äußere Abschnitt 43 ist über den gesamten Umfang einteilig geschlossen durch den Grundkörper 16a gebildet.

Der Abschnitt 42 und der Abschnitt 43 bilden gemeinsamen den Zentrierabschnitt 32a, der von einer engsten Stelle im Übergangsbereich zwischen den Abschnitten 32, 43 zur Eintrittsöffnung 29a in der lichten Breite nur geringfügig, jedoch progressiv zunimmt. Diese engste Stelle ist praktisch ohne Längenerstreckung, weil hier die beiden Trichter 33a, 34a mit ihren engsten Bereichen ineinander übergehen. Die engste Stelle hat etwa gleiche Querschnittshöhe wie Querschnittsbreite, so daß das Werkzeug 22a in ihrem Bereich auch in sowie entgegen Richtung Pfeil 46a das genannte geringe Bewegungsspiel hat. Ist diese Stelle im Querschnitt quadratisch, so kann das Werkzeug 22a hier nur mit vier über den Umfang gleichmäßig verteilten Mantellinien anliegen.

Der Trichter 34a ist ähnlich dem Trichter 34 ausgebildet, jedoch ist der Trichter 33a zur Eintrittsöffnung 29a quer zur Arbeitsebene 10a stärker kontinuierlich erweitert als parallel zur Arbeitsebene. Da das Werkzeug 22a vom Wickelkörper in wechselnden axialen Bereichen abläuft, kann es dadurch zwischen dem Außenumfang des Speichers 18a bzw. des Wickelkörpers und dem Zentrierabschnitt 32a stets gegenüber denjenigen Begrenzungen des Aufnahmekanales 30a berührungsfrei gehalten werden, die im Querschnitt beiderseits etwa parallel zur Arbeitsebene 10a liegen bzw. den Nutboden 48 des Abschnittes 42 und den Verschluß 49 der Nutöffnung 44 bilden.

Der Trichter 33a hat außerdem in seiner Längsrichtung eine etwa parallel zur Arbeitsebene 10a liegende Krümmung bzw. Neigung, die dem tangentialen Zulauf des Stranges 19a entspricht und vom Zentrierabschnitt 32a ausgeht. Zu diesem Zweck ist hier die Führungsfläche 36a mit einem etwa gleich großen oder größeren Krümmungsradius als anhand der Schutzfläche 39a erläutert, konvex über einen Bogenwinkel von etwa 90° derart gekrümmt, daß sie kontinuierlich tangential mit einem Ende an die Ausrichtfläche 35a und mit dem anderen Ende an den Innenumfang 27a anschließt.

Die gegenüberliegende, hintere Stützfläche 41a ist konkav mit einem annähernd doppelt so großen Krümmungsradius gekrümmt, so daß sie mit einem Ende kontinuierlich tangential an die Führungsfläche 48a und dem anderen Ende im wesentlichen spitzwinklig an den Innenumfang 27a anschließt. Durch die beiden unterschiedlichen Krümmungsradien ergibt sich die flache, jedoch progressive Erweiterung des Trichters 33a.

Legt man durch den Aufnahmekanal 30a eine Mittelachse 45, die in jedem Kanalbereich in der Mitte der Breite des Kanales liegt, so ist diese Mittelachse 45 in Ansicht auf die Arbeitsebene 10a radial nach außen entgegen Richtung Pfeil 46a und radial nach innen in Richtung Pfeil 46a bogenförmig gekrümmt, während sie im Bereich des Zentrierabschnittes 32a geradlinig und etwa in derjenigen Axialebene 47 des Werkzeugkopfes 1a liegt, gegenüber welcher die Ausrichtfläche 35a parallel vorversetzt ist.

Die gegenüber der Austrittsöffnung 31a schmalere und vorversetzte Eintrittsöffnung 29a liegt wenigstens mit ihrer Mitte oder als Ganzes gegenüber dieser Ebene 47a in Richtung 46a vorversetzt, während die Austrittsöffnung 39a mit ihrer Mitte bzw. bis etwa auf die Querschnittsweite des Werkzeuges 22a gegenüber der Ebene 47 zurückversetzt liegt.

Die Flächen 36a, 41a reichen in jedem Bereich des Trichters 33a annähernd über dessen gesamte Höhe und sind wie die übrigen vorderen und hinteren Begrenzungsflächen des Aufnahmekanales 30a durch die einander zugekehrten Seitenflächen entsprechend gekrümmt verlaufender Rippenstege gebildet.

Die Außenform des Trägers 15a bildet eine flachscheibenförmige und zur Drehachse 11a an beiden Stirnseiten stets im wesentlichen ansteigende Diskusform, die auf der antriebsseitigen Stirnseite flacher bzw. weniger stark profiliert ist als an der freien Stirnseite. Der Kranz 26a ist außerhalb der Aufnahme 30a durch ein im Querschnitt winkelförmiges Ringscheibenprofil gebildet, dessen den Außenumfang 28a bildender, kürzerer Schenkel zur Antriebsseite hin gerichtet und nur um die erforderlichen Wanddicken länger als die lichte Höhe des Zentrierabschnittes 32a bzw. des Trichters 34a ist. Im Bereich des Innenumfanges des Kranzes 26a liegt die bajonettverschlußartige Verbindung 51, von welcher aus der Grundkörper 16a und der Deckel 17a jeweils einen flachkegelstumpfförmigen Mantelteil 53, 54 bilden, der etwa bis zum Gehäuseraum für den Speicher 18a reicht.

Die Mantelteile 53, 54 schließen mit ihren weiteren Enden im wesentlichen unmittelbar an die Stirnseiten des Kranzes 26 an. Der Mantelteil 54 bildet auch den Verschluß 49 für den jeweiligen Trichter 33a. An den Innenumfang des Mantelteiles 53 schließt eine nach außen nur etwa um die zugehörigen Wandungsdicken abgesetzte Stufe in Form eines spitzwinklig konischen oder annähernd zylindrischen Teiles 55 an, während an den Innenumfang des Mantelteiles 54 ein axial längerer und nach außen vorstehender Zylinderteil 56 anschließt, welcher als Greifbund zum manuellen Fassen der Deckels 17a beim Lösen und Schließen der Verbindung 51 dient. Beide Zylinderteile 55, 56 haben etwa gleiche Weite entsprechend dem Außenumfang des Gehäuseraumes für den Speicher 18a.

An den Zylinderteil 55 schließt radial nach innen ein weiterer Mantelteil 57 an, der gegenüber dem Mantelteil 53 noch flacher kegelstumpfförmig und von größerer Radialerstreckung ist. In entsprechender Weise schließt auch an den Zylinderteil 56 ein flacher kegelstumpfförmiger Mantelteil 58 an, welcher im Zentrum von dem Betätigungsglied 24a durchsetzt ist, das somit mit seinem Außenumfang noch einmal einen geringfügig vorstehenden Zylinderteil und mit seiner Stirnfläche eine ballige Zentralfläche an dieser Stirnseite des Grundkörpers 15a bildet. Der Innenumfang des Mantelteiles 57 schließt einteilig an eine annähernd zylindrisch nach außen vorstehende Nabe 59 an.

Außer im Bereich der Nabe 59, die im Arbeitszustand nicht frei liegt, hat dadurch die jeweilige Stirnfläche der Form 50 radial innerhalb des Kranzes 26a von der Arbeitsebene 10a einen maximalen Abstand, der höchstens etwa ein Drittel, insbesondere etwa ein Viertel, des Durchmessers im Bereich der Zentrierabschnitte 32a bzw. der Verbindung 51 oder höchstens ein Fünftel, insbesondere etwa ein Siebtel, des Durchmessers des Außenumfanges 28a entspricht. In diesen Bereichen sind die Stirnflächen auch im wesentlichen in keinem Fall parallel zur Arbeitsebene 10a bzw. eben ausgebildet.

Dadurch ist die Gefahr, daß sich an dem Werkzeugkopf 1a Pflanzenteile oder dgl. aufwickeln oder verhaken können, sehr gering. Der Außendurchmesser des Außenumfanges 28a kann z.B. in der Größenordnung von 15 cm liegen, während die Länge des Aufnahmekanales 30a in der Größenordnung von 4 cm liegt. Die Länge des Aufnahmekanales 30a liegt mindestens etwa in der Größenordnung des Abstandes der Eintrittsöffnung 29a von der Drehachse 11a und ist demgegenüber vorzugsweise größer.

Die auch durch den Schalenkörper der Konsole 9 bestimmte maximale Länge des freiliegenden Werkzeugteiles 21a ist verhältnismäßig kurz, insbesondere etwa in der Größenordnung zwischen 5 und 9 cm, insbesondere zwischen 6 und 7 cm, gewählt, so daß der Flugkreisdurchmesser des jeweiligen Werkzeuges 22a etwa doppelt so groß wie der Durchmesser des Außenumfanges 28a sein kann. Dies bringt auch eine wesentliche Verringerung derjenigen Geräusche mit sich, die durch die Luftreibung des Werkzeugteiles 21a oder dgl. verursacht werden.

Die genannten Bauteile und Anordnungen können jeweils nur ein einziges Mal oder mehrfach vorgesehen sein, z.B. um etwa achsgleich hintereinander- und/oder etwa achsparallel nebeneinanderliegende Werkzeug-Träger bzw. Werkzeuge in einer oder mehreren Arbeitsebenen vorzusehen. Anstatt die jeweilige Fläche des Aufnahmekanales 30 bzw. 30a kontinuierlich zu krümmen, kann sie auch facettenartig polygonal ausgebildet und daher nur angenähert kontinuierlich gekrümmt sein.

## Patentansprüche

1. Werkzeugkopf zur Bearbeitung von Pflanzen oder dgl., insbesondere Fadenschneider, dadurch gekennzeichnet, daß er wenigstens einen in einer Arbeitsbewegung, wie einer Rotation, unter vorbestimmter maximaler Arbeitsgeschwindigkeit antreibbaren Werkzeug-Träger (15, 15a) aufweist, der insbesondere wenigstens eine Werkzeug-Aufnahme (30, 30a) für mindestens ein durch Auftreffen auf einen stehenden Widerstand entgegen Arbeitsrichtung aus einer Haupt-Arbeitslage maximal schlagartig unter Arbeitsgeschwindigkeit gegen wenigstens eine hintere Stützfläche (39, 39a) auslenkbares und bei Freigabe vom Widerstand selbsttätig rückstellendes Werkzeug (22, 22a) aufweist, wobei das einer Arbeitsebene (10, 10a) zugeordnete Werkzeug (22, 22a) vom Bereich der Stützfläche (39, 39a) von innen nach außen bzw. über eine Außenseite (28, 28a) des Trägers (15, 15a) im wesentlichen frei vorsteht und/oder wenigstens einer Stützfläche (39, 39a) für mindestens ein Werkzeug (22, 22a) wenigstens ein Beschädigungssschutz (40, 40a) zugeordnet ist, der das Werkzeug bei Auslenkung unter maximaler Auslenkgeschwindigkeit frei von bleibenden Querschnittsverformungen auffängt.

2. Werkzeugkopf nach Anspruch 1, dadurch gekennzeichnet, daß mindestens eine Stützfläche (39, 39a) wenigstens teilweise mindestens eine Knick-Schutzfläche (39, 39a) aufweist, daß insbesondere eine Stützfläche (39, 39a) auf einer mindestens dem 7- bis 20-fachen der Querschnittsweite eines Werkzeuges (22, 22a) entsprechenden Länge als Knickschutz ausgebildet ist und daß vorzugsweise eine Schutzfläche (39, 39a) entgegen Arbeitsrichtung (46, 46a) von einem Werkzeug (22, 22a) zunehmend größeren Abstand aufweist und/oder sich über einen Bogenwinkel von mehr als 90° erstreckt.

3. Werkzeugkopf nach Anspruch 1 oder 2, dadurch gekennzeichnet, daß mindestens ein Beschädigungsschutz (40, 40a) wenigstens eine im wesentlichen konvex gekrümmte Schutzfläche (39, 39a) aufweist, daß insbesondere ein Beschädigungsschutz (40, 40a) nach außen von einer Zentrierzone (32, 32a) ausgeht, in welcher das Werkzeug (22, 22a) mit geringstem Bewegungsspiel gegenüber einer Aufnahme (30, 30a) festgelegt ist und daß vorzugsweise eine Zentrierzone (32, 32a) eine höchstens dem 1- bis 2-fachen einer Querschnittsweite des Werkzeuges (22, 22a) entsprechende Länge und/oder eine Schutzfläche (39, 39a) einen etwa dem 4- bis 15-fachen dieser Querschnittsweite entsprechenden Krümmungsradius hat.

4. Werkzeugkopf nach einem der vorhergehenden Ansprüche, dadurch gekennzeichnet, daß mindestens ein Beschädigungsschutz (40, 40a) wenigstens eine Anschlag- und Ausrichtfläche (35, 35a) für ein Werkzeug (22, 22a) aufweist, daß insbesondere eine Schutzfläche (39, 39a) und eine gegenüberliegende Ausrichtfläche (35, 35a) eine von einer annähernd spiegelsymmetrischen Anordnung wesentlich abweichende Anordnung aufweisen und daß vorzugsweise eine Ausrichtfläche (35, 35a) eine annähernd mit der Arbeitslage eines Werkzeuges (22, 22a) übereinstimmende Ausrichtung aufweist und/oder im wesentlichen über die Länge der Schutzfläche (39, 39a) bzw. annähernd bis zur Außenseite (28, 28a) des Trägers (15, 15a) annähernd geradlinig ist.

5. Werkzeugkopf nach einem der vorhergehenden Ansprüche, dadurch gekennzeichnet, daß mindestens eine Aufnahme (30, 30a) wenigstens einen über eine Längserstreckung langgestreckten Aufnahme-Kanal für das Werkzeug (22, 22a) aufweist, daß insbesonder eine Aufnahme (30, 30a) wenigstens auf einem äußeren Teil (43) ihrer Längserstreckung quer zur Arbeitsebene (10, 10a) eine kleinere lichte Weite als parallel zur Arbeitsebene (10, 10a) aufweist, und daß vorzugsweise eine Aufnahme (30, 30a) wenigstens auf einem über ihren Umfang für den Durchtritt des Werkzeuges (22, 22a) geschlossenen Teil (32, 32a) ihrer Länge im wesentlichen polygonale Querschnitte mit annähernd gleich langen Polygonkanten und/oder etwa in Richtung der Arbeitsebene (10, 10a) langgestreckte Flachform aufweist.

6. Werkzeugkopf nach einem der vorhergehenden Ansprüche, dadurch gekennzeichnet, daß mindestens eine Aufnahme (30, 30a) wenigstens auf einem inneren Teil (42) ihrer Länge quer zur Arbeitsebene (10a) größere lichte Weite als parallel zur Arbeitsebene (10a) aufweist, daß insbesondere eine Aufnahme (30a) nach innen quer und/oder etwa parallel zur Arbeitsebene trichterförmig erweitert ist und daß vorzugsweise eine Aufnahme (30a) wenigstens auf einem Teil (42) ihrer Länge entlang einer Längsseite zum Einsetzen eines Werkzeuges (22a) quer zu ihrer Längsrichtung offen und/oder nutförmig mit schräg zur Arbeitsebene (10a) liegender Nutöffnung (44) ist.

7. Werkzeugkopf nach einem der vorhergehenden Ansprüche, dadurch gekennzeichnet, daß mindestens eine Aufnahme (30, 30a) in Ansicht quer zur Arbeitsebene (10, 10a) eine von einer Geraden wesentlich abweichend in unterschiedlichen Richtungen verlaufende Symmetrie- bzw. Mittelachse (45) aufweist, daß insbesondere eine Aufnahme (30, 30a) eine in entgegengesetzten Richtungen verlaufende Mittelachse (45) aufweist und daß vorzugsweise eine Aufnahme (30, 30a) eine bogen- und/oder annähernd S-förmig geschwungene Mittelachse (45) aufweist.

8. Werkzeugkopf nach einem der vorhergehenden Ansprüche, dadurch gekennzeichnet, daß mindestens eine Aufnahme (30, 30a) wenigstens ein Gleitlager zur längsverschiebbaren Aufnahme mindestens eines Werkzeuges (22, 22a) bildet, daß insbesondere eine Aufnahme (30, 30a) ein inneres offenes Durchtrittsende (29, 29a) für ein Werkzeug (22, 22a) bildet und daß vorzugsweise ein inneres und ein äußeres Durchtrittsende (33a, 34a) einer Aufnahme (30a) quer zueinander trichterförmig erweitert sind.

9. Werkzeugkopf nach einem der vorhergehenden Ansprüche, dadurch gekennzeichnet, daß mindestens ein Werkzeug-Träger (15, 15a) eine Speicher-Aufnahme für einen an ein inneres Ende wenigstens einer Werkzeug-Aufnahme (30, 30a) anschließenden Werkzeug-Speicher (18, 18a) aufweist und daß ein vom Speicher (18, 18a) bis zur Außenseite (28, 28a) des Werkzeug-Trägers (15, 15a) reichender bzw. innerhalb des Trägers (15, 15a) liegender, innerer Abschnitt des Werkzeuges (22, 22a) ein Fliehgewicht mit einer der Arbeitsgeschwindigkeit zugehörigen Fliehkraft bestimmt, daß insbesondere eine Nachstelleinrichtung (23, 23a) zur Nachstellung des Werkzeuges (22, 22a) während der Arbeitsbewegung unter einer am Werkzeug (22, 22a) angreifenden Nachstellkraft vorgesehen ist und daß vorzugsweise die Fliehkraft des inneren Abschnittes mindestens eines Werkzeuges (22a) wenigstens so groß wie die Nachstellkraft für ein Werkzeug (22a) ist.

10. Werkzeugkopf nach einem der vorhergehenden Ansprüche, dadurch gekennzeichnet, daß mindestens ein Werkzeug-Träger (15, 15a) ein Zentralgehäuse und an dessen Außenumfang einen äußersten ringscheibenförmig vorstehenden Kranz (26, 26a) bildet, daß insbesondere der Kranz (26, 26a) ausschließlich von einem von einem lösbaren Gehäusedeckel (17, 17a) gesonderten Gehäuseteil (16, 16a) gebildet ist und daß vorzugsweise der Kranz (26, 26a) außer im Bereich der jeweiligen Werkzeug-Aufnahme (30, 30a) eine geschlossene äußere Umfangsfläche (28, 28a) und/oder das Zentralgehäuse auf wenigstens einer Stirnseite des Kranzes (26, 26a) ausschließlich im wesentlichen flach stumpfwinklig außenkonische, freiliegende Stirnflächen aufweist.
